**Europäisches Patentamt**

**European Patent Office**

**Office européen des brevets**

(19)

(11) Publication number: **0 155 487**
**A2**

(12) **EUROPEAN PATENT APPLICATION**

(21) Application number: **85101291.4**

(22) Date of filing: **07.02.85**

(51) Int. Cl.⁴: **F 04 B 1/20**
**F 01 B 3/02**

(30) Priority: **08.02.84 JP 19983/84**

(43) Date of publication of application.
**25.09.85 Bulletin 85/39**

(84) Designated Contracting States:
**CH DE FR GB IT LI NL SE**

(71) Applicant: **HITACHI, LTD.**
**6, Kanda Surugadai 4-chome Chiyoda-ku**
**Tokyo 100(JP)**

(72) Inventor: **Kanamaru, Hisanobu**
**3449-1, Higashiishikawa**
**Katsuta-shi(JP)**

(72) Inventor: **Tohkairin, Akira**
**1473-8, Tabiko**
**Katsuta-shi(JP)**

(72) Inventor: **Onuma, Tomiyasu**
**1395-1, Takaba**
**Katsuta-shi(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Fluid machine.**

(57) A fluid machine has a cylinder block rotating together
with a rotary shaft and having cylinder bores which receive
pistons. The pistons are connected to a swash plate which in
turn is connected to the rotary shaft through a universal joint.
A fluid is puped by the reciprocating motion of the pistons
which is caused by the rotation of the cylinder block. This
machine exhibits a superior mechanical eficiency thanks to
the use of the universal joint.

FIG.1

- 1 -                                    0155487

FLUID MACHINE

BACKGROUND OF THE INVENTION

Field of the Invention

The present invention relates to a fluid machine for pumping a working fluid.

Description of the Prior Art

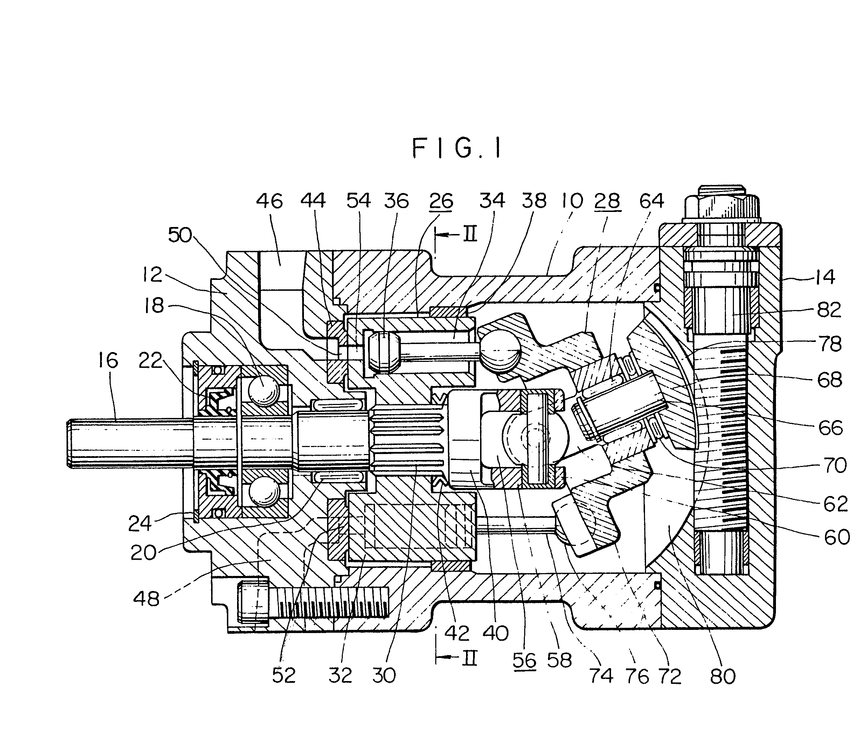

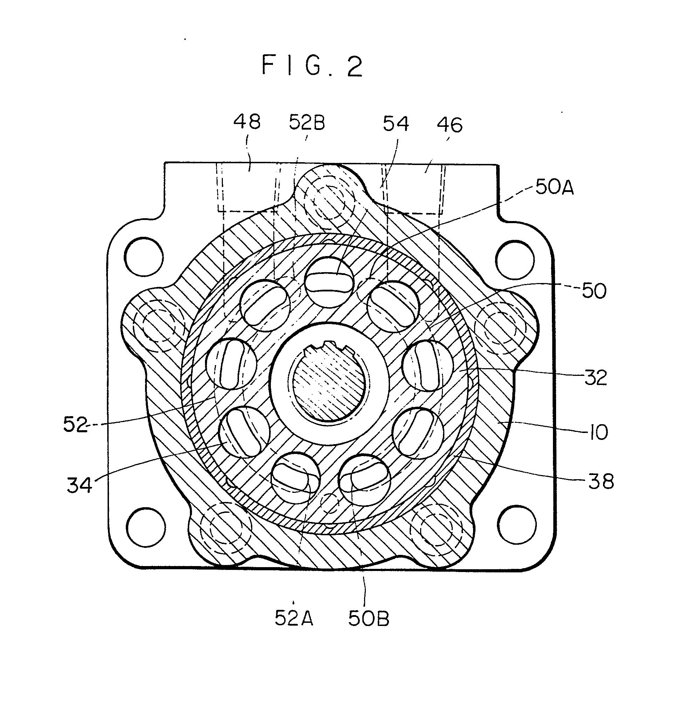

Generally, two types of fluid machine for pumping a working fluid have been known: namely, a rotary swash plate type in which, as shown in Fig. 1 of Japanese Patent laid-Open No. 91383/1983 by way of example, a rocking disc carried by a driven shaft is made to rock by rotation of a swash plate fixed to a driving shaft, thus causing a reciprocatory motion, and a rotary tilt shaft type in which, as shown in Fig. 2 of the above-mentioned literature by way of example, eccentric motion of tilt shaft provided on the output end of a driving shaft is transmitted to a rocking disc carried by a rotation prevention means on the periphery of the tilt shaft, thus causing a reciprocatory motion.

The fluid machine of rotary swash plate type, however, requires a bearing means such as a needle bearing disposed between the swash plate and the rocking disc, in order to attain a sooth conversion of the rotation of the swash plate into reciprocatory motion, so that the construction of the machine is complicated

0155487

undesirably.

In addition, since the whole thrust load is born by a central ball bearing which holds the rocking disc, friction resistance becomes large, resulting in an impractically low mechanical efficiency.

In the fluid machine of this type, piston rods to be connected to pistons slidably received in cylinders are connected to the peripheral portion of the rocking disc. Therefore, there is a limit that the rocking disc must not rotate. This prevention of rotation is performed by meshing a spur gear provided at the side of the rocking disc to a stationary bebel gear (so called "gear slide type") and the durability thereof is low. In addition, the thrust load applied to the rocking disc is bone by a ball bearing and this ball bearing not only requires a high degree of machining and assembling skill in the production but also has a problem of the durability, so that it has poor reliability. The reliability of this bearing would be improved by taking various suitable measures, but such measures increases the production cost uneconomically.

The fluid machine of the second-mentioned typem i.e., the tilt shaft type, is the machine in which the tilt shaft is integrally provided to the drive shaft and the rocking disc is provided at the periphery of the tilt shaft through a thrust bearing. In this fluid machine, the thrust load acts in the axial direction as

0155487

in the case of the fluid machine of the swash plate type. Therefore, the machine has serious problems concerning the durability of the rotation prevention means to the rocking disc, the dimensification of the thrust bearing and the complication of the construction.

In addition, since the tilt shaft is long and heavy, the rotational balance is bad and it has been a cause of the vibration and the noise. Though this rotational balance has been modified by a balance weight, though this modification is employed also in the former, it cannot be balanced in the cause of shape. Therefore, such modification cannot resolve the rotational umblance basically and it appears as a deflection of the center. This deflection of the center acts on the driving shaft as an eccentric load and brings an axial friction. The mechanical vibration not only shortens the life of the machine but also impairs the reliability as a product and it results a noise to give an unpleasan feeling to the user. Itis, therefore, quite important to eliminate any vibration.

As stated above about the typical fluid machines, in either case, the axial thrust load and the eccentric load acting on the driving shaft are large and although a number of countermeasures have been taken, they are far from the dissolution of the mechanical friction in the axial direction and the eccentricity of the driving shaft. Synthetically, the known machines

- 4 -                                    **0155487**

are that of which the mechanically efficiency is very
bad.


SUMMARY CF THE INVENTION

An object of the invention is to provide a
fluid machine having a good mechanical efficiency.

The features of the invention exist in a fluid
machine comprising:

(a)        a hollow cylinder case;

(b)        an end cover disposed at one side of the
cylinder case;

(c)        a rotary shaft extending in the cylinder case
and adapted to rotate;

(d)        a cylinder block disposed in the cylinder case
and adapted to rotate together with the rotary shaft;

(e)        cylinder bores formed in the cylinder block;

(f)        a support shaft provided on the end cover at
portion of radially offsetting from the extension of the
axis of rotation of the rotary shaft and extending between the end cover and the cylinder block so as to
intersect to the axis of rotation of the rotary shaft;

(g)        a cross-spider type universal joint comprising
a first rotary end rotatably supported by the support
shaft, a second rotary end fixed to the end of the
rotary shaft, and a cross-spider through which the first
and second rotary ends are connected;

(h)        a swash plate secured to the first rotary end of the universal joint;

(i)     pistons received in the cylinder bores and connected to the swash plate; and

(j)     a fluid inlet passage and a fluid outlet passage provided on the opposite side to the end cover and arranged such as to supply, when the pistons are in their stroke for receiving a working fluid, fluid to the cylinder bores through passage holes formed in the cylinder bores and discharge, when the pistons are in their stroke for discharging fluid, fluid from the cylinder bores through the passage holes.

According to the fluid machine as constructed above, the cylinder block and the motion conversion means are held seemingly stationary, since they rotate in synchronism with each other, so that the pistons held in the cylinder bores formed in the cylinder block can perform the pumping of the fluid.

According to such construction, the mechanical efficiency becomes very high since the motion converting mechanism is constructed by an universal joint. Furthermore, the number of the parts can be reduced. Consequently, the accumulation of dimensional error is minimized to be able to facilitate the tolerance control in the production of the machine.

BRIEF DESCRIPTION OF THE DRAWINGS

Fig. 1 is a vertical sectional view of an embodiment of the fluid machine in accordance with the invention;

Fig. 2 is a sectional view taken along the line II-II of Fig. 2;

Fig. 3 is a perspective view of a motion converting mechanism;

Fig. 4 is a perspective view of a support shaft and a base;

Fig. 5 is a sectional view for explaining a mechanism for varying the angle of the support shaft;

figs. 6 and 7 are perspective views of a universal joint; and

Fig. 8 is an exploded perspective view of a motion converting mechanism.

DETAILED DESCRIPTION OF THE PREFERRED EMBODIMENT

Referring to Fig. 1, a fluid machine embodying the present invention has a cylinder case 10. A front cover 12 and an end cover 14 are fastened to respective ends of the cylinder case 10 by means of, for example, bolts. The front cover 12 may be formed integrally with the cylinder case 10. A rotary shaft 16 is extended through the center of the front cover 12. The rotary shaft 16 is rotatably supported by the front cover 12 through a ball bearing 18 and a needle bearing 20.

A seal member 22 is disposed at the outside of the ball bearing 18 and is retained by means of a clip

- 7 -

0155487

24.

The cylinder case 10 accomodates a working chamber assembly 26 and a motion converting mechanism 28, and is sealingly closed by an end cover 14.

The working chamber assembly 26 comprises a cylinder block 32 engaging with a spline 30 formed on an intermediate part of the rotary shaft 16 and rotatable as a unit with the rotary shaft 16, a plurality of hollow cylindrical cylinder bores 34 formed in the cylinder block 32 at a predetermined pitch, and pistons 36 respectively received in the cylinder bores 34. As the cylinder block 32 rotates in syncronism with the rotary shaft 16, a plane bearing 38 is disposed between the outer periphery of the cylinder block 32 and the inner periphery of the cylinder case 10. Needless to say, the plane bearing 38 may be substituted by other types of bearing such as a ball bearing, needle bearing and so forth.

A leaf spring 42 is disposed between the cylinder block 32 and a large-diameter portion 40 of the rotary shaft 16, to thereby resiliently bias the cylinder block 32 towards the front cover 12. The resilient biasing force is effective in attaining a good sealing contact between the cylinder block 32 and a seat member 44 fixed to the front cover 12, while facilitating assembly and adjustment.

The front cover 12 is formed with a fluid inlet passage 46 and a fluid outlet passage 48. As will be seen from Fig. 2, the fluid inlet passage 46 and the fluid outlet passage 48 are connected to an inlet channel 50 and an outlet channel 52 which are formed in the seat member 44.

More specifically, as will be seen from Fig. 2 which is a sectional view taken along the line II-II of Fig. 1, the seat member 44 is provided with an arcuate inlet channel 50 and an arcuate outlet channel 52 which are communicated with the fluid inlet passage 46 and the fluid outlet passage 48.

An arcuate passage hole 54 is formed in the top of each cylinder bore 34, so that each of passage holes 54 moves over the inlet channel 50 and the outlet channel 52.

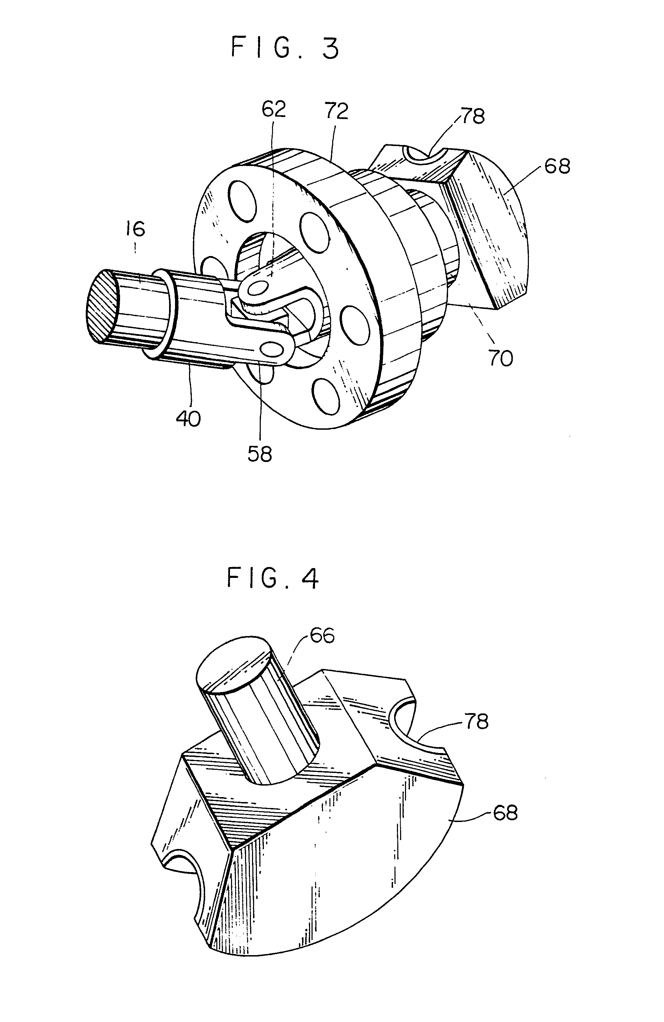

An explanation will be made hereinunder as to the motion converting mechanism 28, with reference to Figs. 3, 4, 5, 6 and 7.

The enlarged end portion 40 of the rotary shaft 16 constitutes an arm support member 58 of a cross-spider type universal joint 56. The arm support member 58 may be formed integrally with the rotary shaft 16 or may be formed separately from the rotary shaft 16 and then fixed to the latter.

The arm support member 58 has opposing walls for receiving a first pair of arms 60A of a cross-spider 60 of the universal joint. A second pair of arms 60B of the cross-spider 60 are supported by another arm support member 62 which is supported through a needle bearing 64 by a support shaft 66 which is radially offset from the extension of the rotational axis of the rotary shaft 16. The support shaft 66 is fixed to a base 68. A bearing 70 for reducing the friction is placed between the base 68 and the arm support member 62. The axis of the support shaft 66 and the axis of the rotary shaft 16 intersect with angle. The point of intersection of these axes is the center of rotation of the cross-spider 60.

A swash plate 72 is fixed to the arm support member 62 and has holes which receive spherical bearings 76 connected to pistons 36 through connecting rods 74. Needless to say, the swash plate 72 and the arm support member 62 may be formed integrally with each other.

since the rotary shaft 16 rotates in synchronism with the arm support member 62, in result the cylinder block 32, the piston 36, the connecting rod 74 and the swash plate 72 rotate in synchronism as if they are integral with.

As shown in figs. 3 and 4, teeth of a worm gear are formed in the bottom of the base 68. The base is movable along a guide groove 80 formed in the end cover 14, about the center of the cross-spider 60. An adjusting screw 82 meshing with the teeth 78 is provided on the end cover 14.

The adjusting screw 82 is adapted to be rotated by an actuator or manual. Namely, when the actuator rotates the adjusting screw, the base 68 is moved about the center of the cross-spider 60, so that the angle formed between the axis of the support shaft 66 and the axis of the rotary shaft 16 is varied thus changing the displacement when the machine is used as a pump and the rotation speed when the machine is used a a motor.

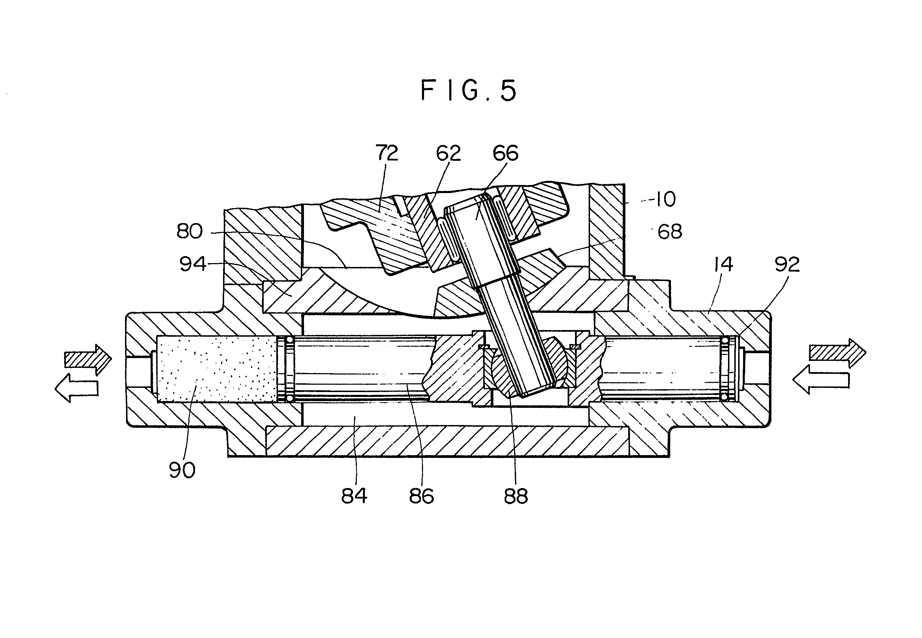

Fig. 5 shows another arrangement for causing the movement of the base 68. In this arrangement, the end cover 14 is formed with a hydraulic piston mechanism 84 movable in the direction substantially perpendicular to the axis of rotation of the rotary shaft 16.

In this hydraulic piston mechanism 84, a support shaft 66 fixed to the base 68 extends into a hydraulic piston 86 and swingably engages with the hydraulic piston 86 through a ball joint 88. At both sides of the piston 86, is movable reciprocatingly, as hydraulic chambers 90 and 92 are alternatingly charged with pressurized oil.

The base 68 is movable along a guide groove 80 formed in a guide plate 94 clamped between the end cover 14 and the cylinder case 10. Needless to say, this movement of the base is a rotary motion about the center of rotation of the cross-spider 60.

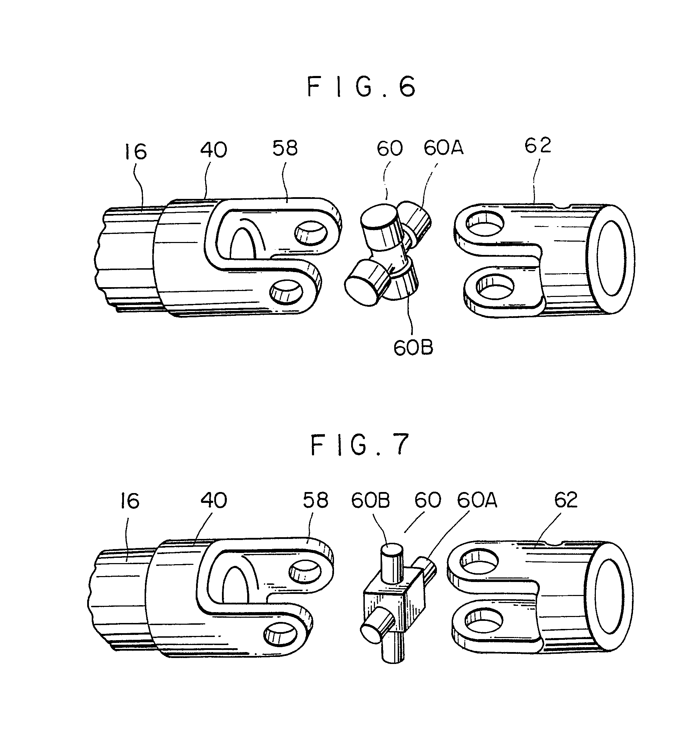

Fig. 6 shows an example of the cross-spider in which arms 60A and 60B are formed integrally in a cross-

0155487

like form, and outer rings are respectively mounted on the ends of arms 60A and 60B through the needle bearings. Fig. 7 shows another example of the cross-spider in which arms 60A and 60B are fixed to a cubic member. These cross-spiders are equally usable in the universal joint incorporated in the fluid machine of the invention.

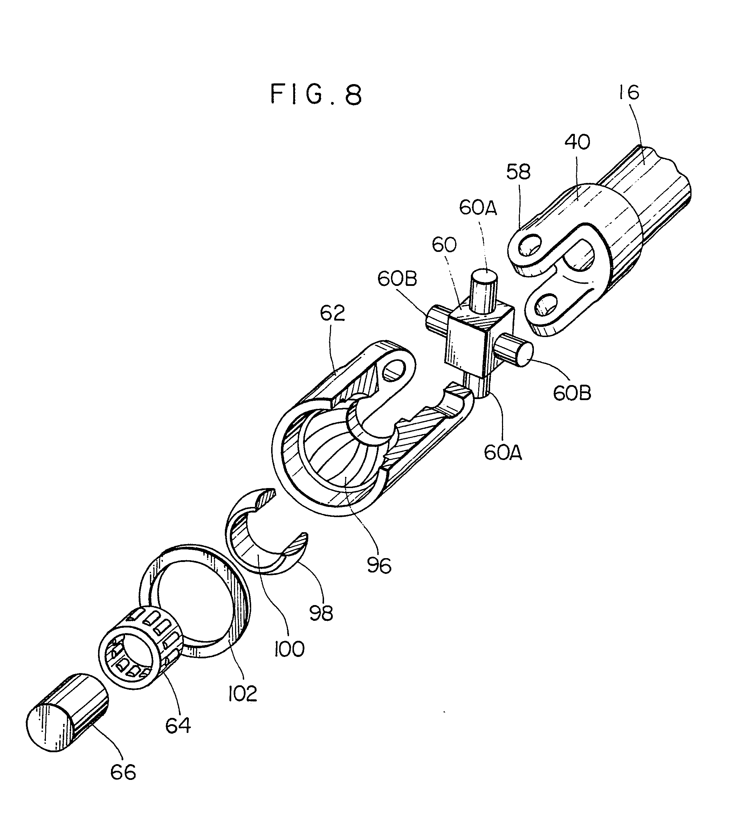

Preferably, the cross-spider type universal joint has a spherical bearing as shown in Fig. 8. More specifically, referring to this Figure, the second pair of arms 60B of the cross-spider 60 is supported by the other arm support member 62 which is provided therein with a spherical bearing 98 having a bearing-receiving hole 100 for receiving a needle bearing 64.

After the spherical bearing 98 is placed to be seated on the spherical seat 96, a stopper ring 102 is fitted in the arm support member 62, so that the spherical bearing 98 is stably held in the arm support member 62.

The bearing receiving hole 100 in the spherical bearing 98 receives a needle bearing 64 carried by the support shaft 66 which is, as stated before, radially offset from the extension of the axis of rotation of the rotary shaft 16.

The support shaft 66 is fixed to the base 68, and a bearing 70 is interposed between the base 68 and the arm support member 62.

- 12 -

0155487

The axis of the support shaft 66 and the axis of the rotary shaft 16 intersect with angle at a point which coincides with the center of rotation of the cross-spider 60.

The arm support member 62 is rotatable with respect to the support shaft 66, so that any dimensional error after the assembly is absorbable.

It is to be pointed out here that slight gaps inevitably exist between the cross-spider 60 and the arm support members 58, 62, so that the center of the cross-spider is moved continuously and an eccentric load acts between the support shaft 66 and the arm support member 62.

If the spherical bearing 98 are not used, the durability of the machine is seriously affected by the eccentric load acting between the support shaft 66 and the arm support member 62. In the described embodiment, the large effect to grately reduce the influence of the eccentric load and to grately increase durability, is obtained by the use of the spherical bearing 98.

The described embodiment of the fluid machine operates in a manner which will be explained hereinunder.

As the rotary shaft 16 is rotated by the power of a prime mover such as an internal combustion engine or an electric motor, the cylinder block 32 is rotated in synchronism with the rotary shaft 16. At the same time, as the arm support member 58 formed on the enlarged portion 40 of the rotary shaft 16, the cross-spider 60 and the arm support member 62 are rotated, the swash plate 72 is also rotated simultaneously. The ilt angle of this swash plate has been determined by means of the adjusting screw 82 so that the swash plate 72 rotates while keeping the tilt angle.

When the cylinder block 32 and the swash plate 72 start to rotate synchronously in, for example, clockwise direction in Fig. 2, the piston 36 in the cylinder bore 34 located near the end portion 50A of the inlet channel 50 is positioned at the place slightly apart from the top dead center towards the bottom dead center. Then, as the cylinder bore 34 further rotates in the clockwise direction, the piston 36 moves towards the bottom dead center and, when the cylinder bore 34 is located near the other end portion 50B of the inlet channel, the piston 36 is positioned at the place slightly apart from the bottom dead center towards the top dead center.

When the piston 36 is located at the bottom dead center of its stroke, the cylinder bore 34 is located at the place which overlaps neither the inlet channel 50 nor the outlet channel 52.

As the cylinder block 32 further rotates in the clockwise direction, the piston 36 starts to move towards the top dead center when the cylinder bore 34 is located near the end portion 52A of the outlet channel 52. When the cylinder bore 34 is located near the other end portion 52B of the outlet channel 52, the piston 36 is positioned at the place slightly apart from the top dead center towards the bottom dead center.

Of course, when the piston 36 is located at the top dead center of its stroke, the cylinder bore 34 is located at the other place which overlaps neither the inlet channel 50 and the outlet channel 52.

By arranging such that the cylinder bore 34 does not overlap the inlet and outlet channels 50 and 52 when its piston 36 is at the bottom and the top dead centers, it is possible to perfectly such fluid into the pump chamber defined by the bore 34 and the piston 36 and to perfectly discharge fluid from the pump chamber and hence, to improve the pump efficiency.

Although the operation has been described with respect to one cylinder bore 34, ther other cylinder bores 34 can perform the same operation, so that the pumping of fluid is achieved.

As will be seen from the foregoing description, in the described embodiment of the fluid machine, the thrust load applied o the swash plate during conversion of the rotary motion to the reciprocating motion is born by the bearing disposed between the support shaft 6 and the arm support member 62 and by the central portion of the universal joint, in the form of radial load, so that the axial thrust load becomes very small. Accordingly, the mechanical strength is enhanced and the mechanical friction is reduced sharply.

In addition, since the rotary shaft 16, the support shaft 66, the swash plate 72, and the universal joint 56 are separately produced and then assembled together to form the motion converting mechanism, the fluid machine of the invention can be excellent in the assembling performance and the productivity.

Furthermore, as the undesirable effect of the eccentric load between the support shaft and the arm support member, resulted from the movement of the center of the cross-spider, which is inevitable in the universal joint, can be diminished sharply thanks to the use of the spherical bearing 98, the durability is increased remarkably.

As described above, according to the present invention, a fluid machine having superior machine efficiency, which cannot be obtained by the prior art fluid machine, can be obtained since the cross-spider type universal joint is used in the motion converting mechanism converting the rotary motion into the reciprocating motion.

- 1 -                                0155487

WHAT IS CLAIMED IS

1.        A fluid machine comprising:

(a)       a hollow cylinder case;

(b)       an end cover disposed at one side of said cylinder case;

(c)       a rotary shaft extending in the cylinder case and adapted to rotate;

(d)       a cylinder block disposed in said cylider case and adapted to rotate together with said rotary shaft;

(e)       cylider bores formed in said cylinder block;

(f)       a support shaft provided on said end cover at a position of radially offsetting from the extension of the axis of rotation of said rotary shaft and extending between said end cover and said cylinder block so as to intersect to the axis of rotation of said rotary shaft;

(g)       a cross-spider type universal joint comprising a first rotary end rotatably supported by said support shaft, a second rotary end fixed to the end of said rotary shaft, and a cross-spider through which said first and second rotary ends are connected;

(h)       a swash plate secured to said first rotary end of said universal joint;

(i)       pistons received in said cylinder bores and connected to said swash plate; and

(j)       a fluid inlet passage and a fluid outlet passage provided on the opposite side to said end cover and arranged such as to supply, when said pistons are in their stroke for receiving a working fluid, said fluid to said cylinder bores through passage holes formed in said cylinder bores and discharge, when said pistons are in their stroke for discharging said fluid, said fluid from said cylinder bores through said passage holes.

2.      A fluid machine according to claim 1, wherein said fluid inlet passage and said fluid outlet passage are formed in a front cover which is disposed at the opposite side of said cylinder case with respect to said end cover.

3.      A fluid machine according to claim 1, wherein said cylinder block is axially movably engaged with a spline formed on said rotary shaft and is biased resiliently against said front cover by a resilient member.

4.      A fluid machine according to claim 1, wherein a bearing is interposed between the outer periphery of said cylinder block and the inner periphery of said cylinder case.

5.      A fluid machine according to claim 1, wherein said support shaft is provided on said end cover and is able to rotate about the center of rotation of said universal joint.

6.      A fluid machine according to claim 5, wherein said support shaft is fixed to a base toothed at a part thereof and said base is rotated about the center of rotation of said universal joint by means of an adjusting screw provided on said end cover.

0155487

7.      A fluid machine according to claim 5, wherein said support shaft is fixed to a base which is rotatable about the center of rotation of said universal joint by a hydraulic piston provided on the end cover.

8.      A fluid machine according to claim 1, wherein said fluid inlet passage and said fluid outlet passage include a seat member which is held in sliding contact with said cylinder bores and having channels which are arranged in a predetermined positional relationship with said passage holes.

9.      A fluid machine according to claim 8, wherein said channels formed ins aid seat member are spaced from each other by a distance such that the bores do not overlap said channels when said pistons are located at their top or bottom dead center.

10.      A fluid machine according to claim 1, wherein said first rotary end is rotatably supported by said support shaft through a spherical bearing.

FIG. 1

0155487

FIG. 2

0155487

FIG. 3

FIG. 4

0155487

FIG. 5

516

0155487

## F I G . 6

16    40    58    60  60A    62

60B

## F I G . 7

16    40    58  60B  60  60A    62

0155487

FIG.8